# EUROPÄISCHE PATENTSCHRIFT

(11) **EP 4 562 306 B1**
(45) Veröffentlichungstag und Bekanntmachung des Hinweises auf die Patenterteilung: **30.09.2026**
(21) Anmeldenummer: 23740994.1
(22) Anmeldetag: 07.07.2023
(51) Int. Cl.: F04C 2/107, F04C 14/28

(54) **VERFAHREN ZUR BESTIMMUNG ODER ÜBERWACHUNG DES FÖRDERSTROMS EINER EXZENTERSCHNECKENPUMPE**
METHOD FOR DETERMINING OR MONITORING THE DELIVERY FLOW OF AN ECCENTRIC SCREW PUMP
PROCÉDÉ DE DÉTERMINATION OU DE SURVEILLANCE DU DÉBIT DE REFOULEMENT D'UNE POMPE À VIS EXCENTRIQUE

(30) Priorität: 29.07.2022 DE 102022119147
(43) Veröffentlichungstag der Anmeldung: 04.06.2025
(73) Patentinhaber: Seepex GmbH, 46240 Bottrop (DE)
(72) Erfinder: MÜLLER, Jens, 44866 Bochum (DE); LEONOW, Sebastian, 44795 Bochum (DE); MÖNNIGMANN, Martin, 44797 Bochum (DE); HANSEN, Christian, 45529 Hattingen (DE); SCHULZ, Johannes, 46242 Bottrop (DE)
(74) Vertreter: Murgitroyd & Company
(86) Internationale Anmeldenummer: PCT/EP2023/068807
(87) Internationale Veröffentlichungsnummer: WO 2024/022786

(56) Entgegenhaltungen:
- WO-A1-2020/048947
- DE-A1- 102020 112 660
- DE-B3- 102020 127 285
- US-A1- 2014 158 426
- US-A1- 2018 010 603
- MULLER JENS ET AL: "Adaptive flow rate calculation for progressing cavity pumps", 2021 23RD INTERNATIONAL CONFERENCE ON PROCESS CONTROL (PC), IEEE, 1 June 2021 (2021-06-01), pages 194 - 199, XP033923719, DOI: 10.1109/PC52310.2021.9447511
- JENS M\"ULLER ET AL: "Modeling pressure pulsation and backflow in progressing cavity pumps with deformable stator", ARXIV.ORG, CORNELL UNIVERSITY LIBRARY, 201 OLIN LIBRARY CORNELL UNIVERSITY ITHACA, NY 14853, 14 April 2021 (2021-04-14), XP081938024, DOI: 10.1016/J.PETROL.2021.108402

## Beschreibung

Die Erfindung betrifft ein Verfahren zur Bestimmung oder Überwachung des effektiven Förderstroms (d. h., der Durchflussrate) einer Exzenterschneckenpumpe während des Betriebes, wobei die Exzenterschneckenpumpe einen Stator und einen in dem Stator mit einer Pumpenfrequenz (exzentrisch) rotierenden Rotor aufweist.

Bei einer solchen Exzenterschneckenpumpe ist der Rotor z. B. über zumindest eine Kuppelstange oder ein vergleichbares Element mit einem Antrieb verbunden, so dass der Rotor bzw. dessen Rotorende bezogen auf die Antriebsachse exzentrisch rotiert. Die Pumpe weist z. B. saugseitig ein an den Stator angeschlossenes Pumpengehäuse auf, das auch als Sauggehäuse bezeichnet wird und das in der Regel eine Gehäuseöffnung, z. B. eine Einlassöffnung, für das zu fördernde Medium aufweist. Ferner kann die Pumpe ein an den Stator z. B. druckseitig angeschlossenes Pumpengehäuse aufweisen, das in der Praxis auch als Druckstutzen bezeichnet wird. Bei einer Exzenterschneckenpumpe handelt es sich um eine Pumpe aus der Gruppe der rotierenden Verdrängerpumpen, die zur Förderung unterschiedlichster Medien und insbesondere hochviskoser Flüssigkeiten in unterschiedlichen Industriebereichen verwendet werden. Die zu fördernden Medien können auch Feststoffanteile enthalten.

Der Stator besteht z. B. aus einem elastischen, vorzugsweise elastomeren Material und er ist in der Regel vor einem einteiligen oder mehrteiligen Statormantel oder Statorgehäuse umgeben. Die rotierende und zugleich die Exzentrizität gewährleistende Verbindung zwischen dem Antrieb bzw. der Antriebswelle oder Verbindungswelle einerseits und dem Rotor andererseits erfolgt z. B. über die im Pumpengehäuse angeordnete Kuppelstange. Die Kuppelstange kann z. B. über ein rotorseitiges Gelenk mit dem Rotor und über ein antriebsseitiges Gelenk mit einer Antriebswelle oder Verbindungswelle verbunden sein. Alternativ sind aber auch Ausführungsformen mit flexibler Kuppelstange ohne Gelenke erfasst.

Der Rotor ist schraubenförmig ausgebildet, und zwar vorzugsweise mit verhältnismäßig großer Steigung und Gangtiefe sowie relativ kleinem Kerndurchmesser. Er ist exzentrisch im Stator bzw. in der Durchgangsöffnung des Stators angeordnet und der Stator bzw. dessen schraubenförmiger Innenraum weist einen Gewindegang mehr auf als der Rotor. Bei Pumpen mit Klemmung ist der Rotordurchmesser größer als der Statorinnendurchmesser bzw. der Durchmesser der Durchgangsöffnung. Die Erfindung umfasst aber auch Pumpen ohne Klemmung. Bei Pumpen mit Klemmung liegt der Rotor - bei idealer Bewegung - über eine oder mehrere ununterbrochene Dichtlinien an der Innenfläche des Stators bzw. an der Innenfläche der Durchgangsöffnung an. Die Dichtlinien trennen Förderräume voneinander, die sich im Zuge der Rotation des Rotors von der Saugseite zur Druckseite bzw. von der Eintrittsseite zur Austrittsseite (kontinuierlich) bewegen. Die Dichtlinie bzw. die Dichtlinien trennen und dichten die Förderkammern voneinander ab, so dass eine Abdichtung der Saugseite des Stators gegenüber der Druckseite erfolgt.

Exzenterschneckenpumpen der eingangs beschriebenen Art sind z. B. aus der DE 10 2014 112 552 A1, DE 10 2010 037 440 A1 und der WO 2009/024279 A1 bekannt.

Aus der DE 10 2018 113 347 A1 kennt man im Übrigen ein Verfahren zur Bestimmung oder Überwachung des Zustandes einer Exzenterschneckenpumpe, wobei der zeitliche Verlauf eines Betriebsparameters der Pumpe, z. B. eines Druckes oder einer Druckdifferenz, zur Verfügung gestellt wird, der periodisch mit der Pumpenfrequenz pulsiert und dessen Pulsationsamplitude vom Zustand der Exzenterschneckenpumpe abhängt. Bei einem idealen System variiert der Betriebsdruck der Exzenterschneckenpumpe nicht mit der Rotation bzw. Rotationsfrequenz der Pumpe, d. h. eine ideale Exzenterschneckenpumpe ist bezogen auf den Betriebsdruck frei von Druckpulsationen. In der Praxis sind Exzenterschneckenpumpen zwar tatsächlich vergleichsweise pulsationsarm, dennoch weisen sie gewisse Druckpulsationen auf, die auf die sich ändernden Dichtlinien während einer Umdrehung und minimale Geometrieunterschiede von Rotor und Stator zurückzuführen sind. Die DE 10 2018 113 347 A1 geht von der Erkenntnis aus, dass die Pulsationsamplitude der Druckpulsation vom Verschleiß der maßgeblichen Komponenten einer Exzenterschneckenpumpe abhängt, so dass über die Analyse der Druckpulsationen Aussagen über den Verschleißzustand der Pumpe getroffen werden können.

Während des Einsatzes von Exzenterschneckenpumpen besteht in der Praxis das Bedürfnis, den Betrieb der Pumpe zu überwachen und bestimmte Betriebsparameter zur Verfügung zu stellen. Dieses betrifft z. B. die Überwachung des tatsächlichen Förderstroms, d. h. der Durchflussrate, einer Exzenterschneckenpumpe. Dazu kommen in der Praxis spezielle Durchflusssensoren zum Einsatz, mit denen der Förderstrom direkt gemessen werden kann. Nachteilig sind die hohen Investitionskosten für solche Durchflusssensoren, so dass sie für viele Anwendungsfälle nicht wirtschaftlich eingesetzt werden können. Aus diesem Grund wurde bereits vorgeschlagen, den Förderstrom lediglich näherungsweise auf der Grundlage der Pumpenkennlinie und in Kenntnis der aktuellen Pumpendrehzahl zu bestimmen. Da diese näherungsweise Bestimmung des Förderstroms auf der Pumpenkennlinie basiert, die in der Regel vom Pumpenhersteller angegeben wird und die neuwertige Pumpe betrifft, wird die Förderstromschätzung bei dieser Vorgehensweise mit zunehmendem Verschleiß der Pumpenkomponenten zunehmend ungenau. Der tatsächliche Zustand der Pumpenkomponenten lässt sich bei dieser Förderstromschätzung nicht berücksichtigen. Damit kann z. B. ein abnehmender Förderstrom unbemerkt bleiben und so zum Prozessstillstand führen.

Ein gattungsgemäßes Verfahren zur Bestimmung oder Überwachung des effektiven Förderstroms einer Exzenterschneckenpumpe während des Betriebes ist auch aus der Veröffentlichung " Adaptive flow rate calculation for progressing cavity pumps" (Jens Müller et al, 2021, 23 International Conference on Process Control (PC) June1 to 4, 2021, Strbske Pleso Slovakia) bekannt

In der DE 10 2020 127 285 B3 wird ein Verfahren zur Feststellung von Leckagen an einer Pumpe mit mindestens einem Verdrängerkörper beschrieben, der das zu pumpende Medium in eine Druckleitung verdrängt. Die Überprüfung des Verschleißzustandes erfolgt in Betriebsphasen, in denen der an die Pumpe angeschlossen Verbraucher nicht aktiv ist, sodass diese Betriebsphasen dazu genutzt werden, mithilfe einer Messausrüstung den Verschleißzustand der Pumpe zu überprüfen.

Eine weitere Ausführungsform eines Rotors/Stator-Systems ist aus der US 2018/0010603 A1 bekannt.

In der US 2014/0158426 A1 wird ein Bohrantrieb mit einem Stator und einem in dem Stator rotierenden Rotor offenbart.

Schließlich diskutiert die DE 10 2020 112 660 A1 ein Verfahren zum Bestimmen eines momentanen Verschleißzustandes einer hydrostatischen Maschine während des Betriebes der Maschine.

Ausgehend von dem vorbekannten Stand der Technik und den beschriebenen Nachteilen liegt der Erfindung die Aufgabe zugrunde, ein Verfahren anzugeben, welches eine verbesserte Bestimmung des tatsächlichen Förderstroms unter Verzicht auf dedizierte Durchflusssensoren ermöglicht, und zwar insbesondere unter Berücksichtigung des tatsächlichen Verschleißes von Rotor und/oder Stator und den damit verbundenen Geometrieänderungen.

Zur Lösung dieser Aufgabe lehrt die Erfindung ein Verfahren zur Bestimmung oder Überwachung des (verschleißabhängigen) effektiven Förderstroms einer Exzenterschneckenpumpe während des Betriebes, mit den Merkmalen des Anspruchs 1.

Die Exzenterschneckenpumpe weist einen Stator und einen in dem Stator mit einer Pumpenfrequenz rotierenden Rotor auf,
wobei der effektive Förderstrom aus der Differenz aus einem (ermittelten) idealen Förderstrom (z. B. einer neuwertigen Pumpe) und einem dem idealen Förderstrom entgegen gerichteten Rückstrom bestimmt wird, der von zumindest einem Spalt in der Dichtlinie zwischen Rotor und Stator abhängt,
wobei ein den Spalt und damit den Rückstrom repräsentierender Betriebsparameter der Pumpe gemessen (oder alternativ zur Verfügung gestellt) wird, der periodisch mit der Pumpenfrequenz pulsiert und dessen Pulsationsamplitude einerseits von dem Verschleißzustand des Rotors und/oder des Stators abhängt und andererseits mit einer den Spalt und damit den Rückstrom beeinflussenden Verkippung des Rotors im Stator zusammenhängt,
wobei der Rückstrom und daraus der effektive Förderstrom wiederholt mit einem mathematischen Modell in Abhängigkeit von den gemessenen Werten für den Betriebsparameter und von (fest) vorgegebenen, z. B. gespeicherten Kennwerten der Pumpe und/oder des zu fördernden Mediums berechnet wird.

Bevorzugt wird als Betriebsparameter zumindest ein Betriebsdruck der Exzenterschneckenpumpe zur Verfügung gestellt oder gemessen und die Pulsationsamplitude der Druckpulsation ausgewertet. Als Betriebsdruck kommt besonders bevorzugt die Messung bzw. Bestimmung einer Druckdifferenz infrage, und zwar vorzugsweise die Differenz zwischen dem Druck auf der Druckseite des Stators einerseits und dem Druck auf der Saugseite des Stators andererseits. Alternativ kann auch ein anderer Betriebsparameter genutzt werden, z. B. ein Drehmoment, welches ebenfalls Pulsationen zeigt.

Der ideale Fördererstrom kann z. B. im Vorfeld rechnerisch ermittelt werden. Alternativ kann der ideale Fördererstrom zuvor durch Messung ermittelt werden, z. B. durch Messung im Testfeld.

Die Erfindung geht zunächst von der Erkenntnis aus, dass der effektive bzw. tatsächliche Förderstrom in einer Pumpe in der Praxis aus der Differenz aus einem z. B. berechneten, idealen Förderstrom und einem dem idealen Förderstrom entgegen gerichteten Rückstrom bestimmt werden kann, der aus einer nicht perfekten Dichtung bzw. Dichtlinie zwischen Rotor und Stator resultiert und damit von zumindest einem Spalt in der Dichtlinie zwischen Rotor und Stator abhängt. Der Spalt bzw. der Rückstrom hängt dabei von der Druckdifferenz, d. h., der Differenz des druckseitigen Druckes und des saugseitigen Druckes ab. Die Druckdifferenz führt zu einer (annähernd) konstanten Verkippung des Rotors, z. B. um eine Y-Achse, die den Rückstrom beeinflusst. Denn die Verkippung des Rotors hebt den Rotor vom Stator ab und erzeugt damit einen sichelförmigen Spalt in der Dichtlinie.

Neben einer solchen konstanten bzw. "statischen" Verkippung (z. B. um eine Y-Achse), die aus einer statischen Druckdifferenz resultiert, treten variierende (periodische) Verkippungen des Rotors, z. B. um die X-Achse, auf. Diese verändern das Volumen der zur Druckseite hin offenen Kavität und daraus resultieren Druckpulsationen bzw. Pulsationen in der Druckdifferenz. Die periodische Verkippung des Rotors (um die X-Achse) führt unmittelbar zu periodischen Veränderungen in der Druckdifferenz, d. h. die Pulsationsamplitude (z. B. der Druckpulsationen) hängt mit der Verkippung des Rotors und damit mit der Größe des Spaltes und dieser wiederum mit dem Rückstrom zusammen. Über die Auswertung der Druckpulsationen bzw. der Pulsationsamplitude der Druckpulsationen lässt sich folglich der Rückstrom entsprechend modellieren und damit der tatsächliche Förderstrom mit einem mathematischen Modell unter Berücksichtigung der gemessenen Druckdifferenz und insbesondere der daraus bestimmten Pulsationsamplitude der Druckpulsationen bestimmen.

Besonders interessant ist dabei die Tatsache, dass die Pulsationsamplitude (d. h., der "peak-to-peak-value" der Druckdifferenz) signifikant vom Verschleiß des Rotors und/oder des Stators der Exzenterschneckenpumpe abhängt. In die Analyse mit Hilfe des mathematischen Modells fließen folglich erfindungsgemäß nicht (nur) die gegebenenfalls bereits im Neuzustand der Pumpe auftretenden Druckpulsationen ein, sondern die tatsächlich auftretenden, verschleißabhängigen Druckpulsationen bzw. die verschleißabhängige Pulsationsamplitude, so dass tatsächlich der sich mit zunehmendem Verschleiß vergrößernde Spalt in der Dichtlinie zwischen Rotor und Stator mit Hilfe des mathematischen Modells berücksichtigt wird.

Damit lässt sich insgesamt der tatsächliche Förderstrom einer Exzenterschneckenpumpe mit einer sehr einfachen Sensorik überwachen, denn erfindungsgemäß erfolgt keine Messung des Förderstroms mit einem Durchflusssensor, sondern eine rechnerische Bestimmung mit Hilfe eines mathematischen Modells, in welches wiederum Messwerte einfließen, die jedoch einfach zur Verfügung gestellt werden können, z. B. in Form von Druckmesswerten und insbesondere einer Druckdifferenz zwischen Druckseite und Saugseite der Pumpe. Alternativ können andere Messwerte, z. B. Drehmomentmesswerte, verwendet werden. Die Ermittlung des Förderstroms gelingt folglich nach Art eines "virtuellen Sensors" auf Basis günstiger Messgrößen und unter Berücksichtigung des tatsächlichen Rotor/Stator-Verschleißes und der damit verbundenen Geometrieänderung. So wird auch mit einfachen, wirtschaftlichen Mitteln eine zuverlässige Bestimmung und Überwachung des Förderstroms bzw. eine Förderstromschätzung möglich, mit welcher die Prozesssicherheit erhöht und Ausfallzeiten minimiert werden können.

Bevorzugt wird zusätzlich zu dem beschriebenen Betriebsparameter, z. B. der Druckdifferenz, auch die Drehzahl der Pumpe bzw. des Rotors gemessen oder in anderer Weise zur Verfügung gestellt und bei der Berechnung mit Hilfe des mathematischen Modells berücksichtigt.

Als fest vorgegebene Kennwerte der Pumpe werden insbesondere die Geometrieparameter der Pumpe, d. h. die Geometrieparameter von Rotor und/oder Stator gespeichert und bei der Berechnung berücksichtigt. Darüber hinaus können Kennwerte des zu fördernden Mediums berücksichtigt werden.

Es versteht sich, dass für einen bestimmten Pumpentyp und gegebenenfalls auch für eine bestimmte Anwendung eine Anpassung des mathematischen Modells erfolgt, indem die maßgeblichen Kennwerte zuvor experimentell und/oder theoretisch ermittelt und in das System im Sinne einer Kalibrierung integriert werden.

Besonders bevorzugt basiert die Berechnung in der beschriebenen Weise auf einer Messung und Analyse des Betriebsdruckes, z. B. der Druckdifferenz, da die Pulsationsamplitude der Druckpulsation signifikant vom Verschleiß der maßgeblichen Komponenten abhängt und damit eine verschleißabhängige Überwachung des Förderstroms möglich ist.

Grundsätzlich umfasst die Erfindung auch die Erfassung und Analyse des zeitlichen Verlaufs anderer Betriebsparameter einer Pumpe, die periodisch mit der Pumpenfrequenz pulsieren und deren Pulsationsamplitude vom Zustand der Exzenterschneckenpumpe abhängt. Ein solcher Betriebsparameter kann in der beschriebenen Weise durch eine Messung zur Verfügung gestellt werden, d. h. gemessen werden. Alternativ ist es auch möglich, den jeweiligen Betriebsparameter nicht direkt zu messen, sondern aus direkt gemessenen Werten zu berechnen. So kann alternativ zum Betriebsdruck als Betriebsparameter z. B. auch das Drehmoment oder der Motorstrom des Pumpenantriebes zur Verfügung gestellt bzw. verwendet werden. In diesem Fall wird die Pulsationsamplitude der Drehmomentpulsation oder Motorstrompulsation ermittelt. So führt z. B. der Verschleiß an Stator und/oder Rotor bei einer Exzenterschneckenpumpe typischerweise nicht nur zu Druckpulsationen, sondern ebenfalls zu pulsationsartigen Änderungen des Drehmomentes der Pumpe, weshalb die Drehmomentpulsation als Betriebsparameter genutzt werden kann. Weiterhin führen die pulsationsartigen Änderungen des Drehmomentes zu einer pulsierenden Leistungsaufnahme bzw. Stromaufnahme, so dass auch die Leistungsaufnahme bzw. Stromaufnahme als Betriebsparameter verwendet werden kann. Ebenso führen verschleißbedingte Änderungen an der Rotor-Stator-Geometrie der Pumpe zu periodischen bzw. pulsierenden Änderungen des Körperschalls, so dass auch der Körperschall als Betriebsparameter verwendet werden kann.

Die Erfindung greift dabei auf die Erkenntnisse aus der DE 10 2018 113 347 A1 zurück. Darüber hinaus basiert die Erfindung jedoch auf der überraschenden Erkenntnis, dass die hervorragend zu analysierenden Pulsationen bzw. Pulsationsamplituden unmittelbar mit der Verkippung des Rotors im Stator zusammenhängen, die wiederum mit dem Spalt in der Dichtlinie zwischen Rotor und Stator und damit mit dem Rückfluss zusammenhängt, so dass über die Druckpulsationen der Rückfluss und damit der Förderstrom der Pumpe modelliert werden kann.

Die Erfindung betrifft nicht nur das beschriebene Verfahren, sondern auch eine Überwachungsvorrichtung für eine Exzenterschneckenpumpe, die Mittel umfasst, die geeignet sind, das beschriebene Verfahren durchzuführen. Die Überwachungsvorrichtung umfasst folglich geeignete Hardware, die mit entsprechender Software zur Durchführung des beschriebenen Verfahrens eingerichtet ist. Diese Hardware umfasst z. B. einen Rechner. Ergänzend kann die Überwachungsvorrichtung zumindest einen Sensor zur Messung des Betriebsparameters umfassen. In bevorzugter Weiterbildung umfasst die Überwachungsvorrichtung zumindest einen Drucksensor zur Messung eines Betriebsdruckes. Es können auch mehrere Drucksensoren vorgesehen sein, z. B. ein Drucksensor zur Messung des Betriebsdruckes auf der Druckseite des Stators und/oder ein Drucksensor zur Bestimmung des Betriebsdruckes auf der Saugseite des Stators. Gegebenenfalls kann zur Bestimmung der Druckdifferenz auch ein Sensor auf der Druckseite ausreichen, und zwar z. B. dann, wenn der Druck auf der Saugseite im Wesentlichen dem Umgebungsdruck entspricht bzw. nahe dem Umgebungsdruck ist.

Die Erfindung betrifft außerdem eine Exzenterschneckenpumpe, die mit einer solchen Überwachungsvorrichtung ausgerüstet ist oder mit einer solchen Überwachungsvorrichtung verbunden ist.

Schließlich betrifft die Erfindung auch ein Computerprogramm, welches Befehle umfasst, die bewirken, dass die Überwachungsvorrichtung das beschriebene Verfahren ausführt.

Im Folgenden wird die Erfindung anhand von Zeichnungen näher erläutert, die lediglich ein Ausführungsbeispiel darstellen. Es zeigen
- Fig. 1: eine Exzenterschneckenpumpe mit einer Vorrichtung zur Bestimmung oder Überwachung des effektiven Förderstroms,
- Fig. 2: die Geometrie eines Rotors einer Exzenterschneckenpumpe nach Fig. 1,
- Fig. 3: eine schematische Darstellung des erfindungsgemäßen Verfahrens zur Bestimmung oder Überwachung des effektiven Förderstroms der Exzenterschneckenpumpe.
- Fig. 4a, b: jeweils einen Teil-Querschnitt durch den Rotor nach Fig. 2.

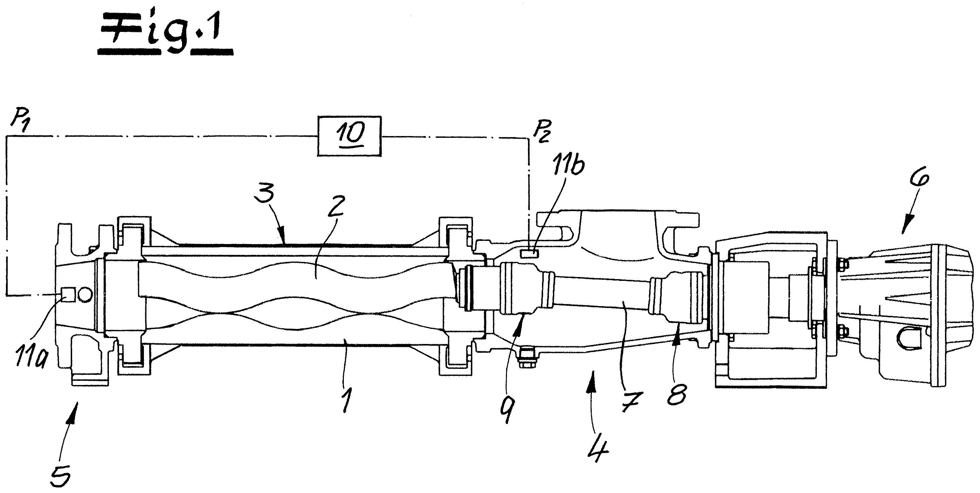

In Fig. 1 ist eine übliche Exzenterschneckenpumpe dargestellt, die einen Stator 1 aus einem elastischen Material und einen in dem Stator 1 rotierenden Rotor 2 aufweist, wobei der Stator 1 von einem Statormantel 3 umgeben sein kann.

Ferner weist die Pumpe ein Sauggehäuse 4 sowie einen Anschlussstutzen 5 auf, der auch als Druckstutzen 5 bezeichnet wird. Die Pumpe weist außerdem einen Pumpenantrieb 6 auf, der über eine Kuppelstange 7 auf den Rotor 2 arbeitet. Die Kuppelstange 7 ist über ein antriebsseitiges Kupplungsgelenk 8 an den Antrieb 6 bzw. eine Antriebswelle und über ein rotorseitiges Kupplungsgelenk 9 an den Rotor 2 angeschlossen.

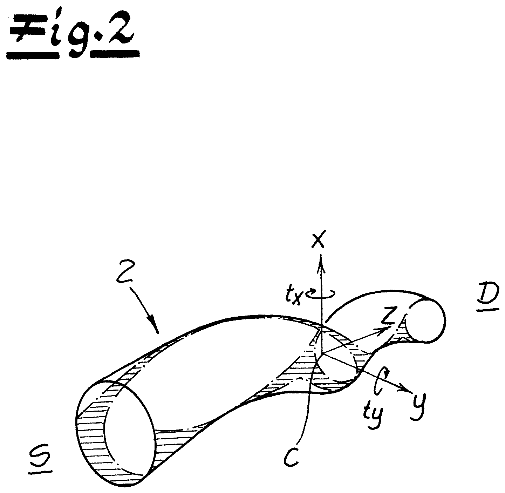

Im Ausführungsbeispiel ist eine Pumpe mit Klemmung realisiert, d. h. der Rotor 2 liegt - bei idealer Bewegung - über mehrere ununterbrochene Dichtlinien an der Innenfläche der Durchgangsöffnung des Stators 1 an. Diese Dichtlinien sind in Fig. 2 schraffiert auf der Oberfläche des Rotors 2 angedeutet.

In dem dargestellten Ausführungsbeispiel sind einerseits im Bereich des Druckstutzens 5 ein Drucksensor 11a für die Bestimmung des Betriebsdrucks auf der Druckseite D und andererseits im Bereich des Sauggehäuses 4 ein Drucksensor 11b für die Bestimmung des Betriebsdrucks auf der Saugseite S vorgesehen. Die Exzenterschneckenpumpe bzw. die Sensoren 11a, 11b sind mit einer Überwachungsvorrichtung 10 verbunden, mit der der Förderstrom Q der Exzenterschneckenpumpe während des Betriebes bestimmt oder überwacht werden kann.

Dabei erfolgt jedoch keine direkte Messung des Förderstromstroms Q über einen Durchflusssensor, sondern es ist ein System mit einem "virtuellen" Sensor realisiert, das auf einer Förderstromschätzung bzw. Förderstromermittlung mit Hilfe eines mathematischen Modells unter Berücksichtigung einer vereinfachten Messung eines Betriebsparameters, nämlich des Betriebsdruckes der Pumpe basiert. Dabei nutzt die Erfindung den Zusammenhang zwischen dem Förderstrom Q der Pumpe und bestimmten Phänomenen und Zusammenhängen, auf die im Folgenden näher eingegangen wird.

In einer Exzenterschneckenpumpe ergibt sich der tatsächliche, effektive Förderstrom Q aus der Differenz aus einem idealen Förderstrom Q₀ und einem dem idealen Förderstrom Q₀ entgegen gerichteten Rückstrom Q_{B}, wobei der Rückstrom von zumindest einem Spalt in der Dichtlinie zwischen Rotor und Stator abhängt. Der ideale Förderstrom Q₀ lässt sich z. B. rechnerisch aus der Pumpendrehzahl n und dem Fördervolumen V₀ bestimmen: $Q = {V}_{0} \times n - {Q}_{B} .$

Die Analyse des Rückstroms Q_{B} ist im Rahmen der Erfindung von besonderer Bedeutung.

Die z. B. messtechnisch zu überwachende Druckdifferenz Δp, d. h. die Differenz zwischen dem (Betriebs-)Druck p₁ auf der Druckseite D und dem (Betriebs-)Druck p₂ auf der Saugseite S, führt bei einer Exzenterschneckenpumpe zu einer konstanten Verkippung t_{y} des Rotors um die in Fig. 2 dargestellte Y-Achse. Diese konstante Verkippung t_{y} erzeugt einen Spalt w, der wiederum einen Rückstrom Q_{B} bewirkt, wobei dieser Spalt w und damit der Rückstrom Q_{B} im Wesentlichen von der über eine Periode gemittelten Druckdifferenz $\overline{Δp}$ abhängt.

Darüber hinaus ergeben sich periodische Druckdifferenzen zwischen Druckseite D und der Saugseite S, die aus einer periodischen Verkippung tₓ des Rotors um die in Fig. 2 dargestellte X-Achse resultieren. Die Verkippung tₓ pulsiert mit der Rotationsfrequenz (bzw. mit der doppelten Rotationsfrequenz, da pro Umdrehung zwei Kammern öffnen) des Rotors 2 und mit einer Pulsationsamplitude für die Verkippung, die auch als "peak-to-peak-value" der Verkippung t_{x,pp} bezeichnet wird. Die periodische Verkippung tₓ resultiert aus periodischen Veränderungen in der Druckdifferenz Δp, so dass Pulsationen in der Druckdifferenz Δp und insbesondere auch die Pulsationsamplitude Δpₚₚ der Druckdifferenz unmittelbar mit der Pulsationsamplitude t_{x,pp} der Verkippung tₓ zusammenhängt.

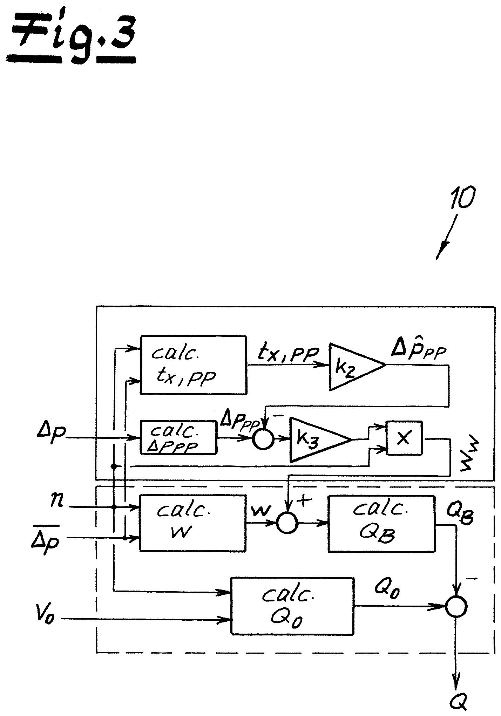

Erfindungsgemäß lässt sich nun der effektive Förderstrom Q mathematisch modellieren, und zwar unter Berücksichtigung gemessener Werte für die Druckdifferenz Δp und insbesondere der Druckpulsation der Druckdifferenz. Besonders interessant ist dabei die Tatsache, dass diese Pulsationsamplitude, d. h., der peak-to-peak-value Δpₚₚ in der Druckdifferenz empfindlich vom Verschleißzustand von Rotor und/oder Stator abhängt, so dass der im Laufe des Betriebes zunehmende Verschleiß von Rotor und/Stator unmittelbar im Zuge der Modellierung berücksichtigt werden kann. Dazu wird auf das Verfahrensschema gemäß Fig. 3 verwiesen.

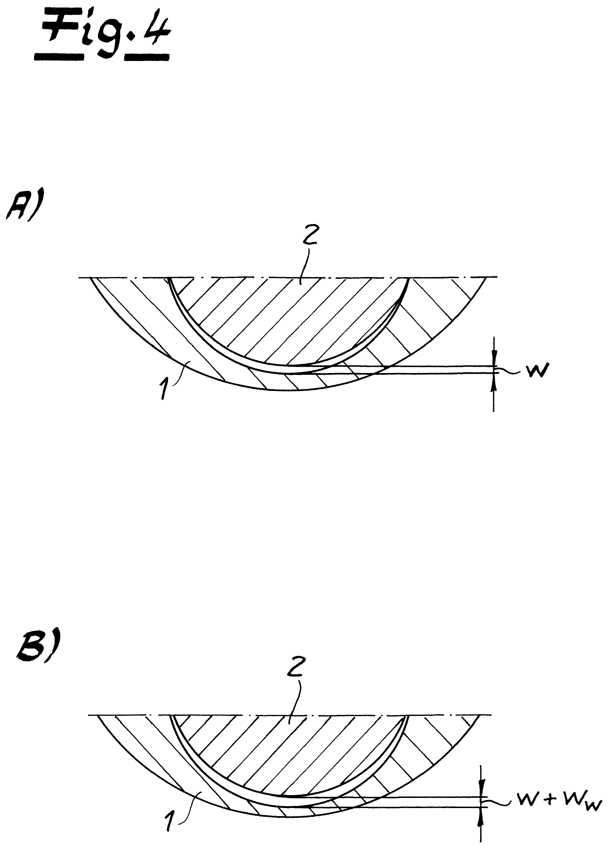

In dem unteren, gestrichelt umrandeten Kasten der Fig. 3 erkennt man die einfache Modellierung des Rückflusses Q_{B} und damit des tatsächlichen Förderstroms Q auf Basis einer Messung der gemittelten Druckdifferenz $\overline{Δp}$, die unmittelbar mit der Größe des sichelförmigen Spaltes w in der Dichtlinie zwischen Rotor 2 und Stator 1 zusammenhängt, und zwar aufgrund der durch die Druckdifferenz Δp erzeugten Verkippung t_{y} des Rotors um die Y-Achse, die zu dem Spalt w führt. Dabei ist in Fig. 3 (unten) mit "calc. w" die Berechnung des sichelförmigen Spaltes w, mit "calc Q_{B}" die Berechnung des Rückstroms bzw. Rückflusses Q_{B} und mit "calc. Q₀" die Berechnung des idealen Förderstroms Q₀ dargestellt. Dieser Spalt w ist in Fig. 4a dargestellt.

Im oberen Teil der Fig. 3 in dem mit einer durchgezogenen Linie dargestellten Kasten ist der Einfluss der periodischen Verkippung tₓ des Rotors um die X-Achse und damit die Druckpulsation Δpₚₚ dargestellt, die signifikant vom Verschleiß von Rotor und/oder Stator abhängt, so dass über die im oberen Teil dargestellte Modellierung unmittelbar der Verschleiß von Rotor und/oder Stator einfließt. So kann aus der Messung der Druckdifferenz Δp die Pulsationsamplitude Δpₚₚ der Druckpulsation, d. h., der peak-to-peak-value der sich periodisch verändernden Druckdifferenz, ermittelt werden (calc. Δpₚₚ). Da jedoch unabhängig vom Verschleiß bereits im Neuzustand der Pumpe Druckpulsationen auftreten, wird über den "peak-to-peak-value" der Verkippung (calc.t_{x,pp})eine verschleißunabhängige Pulsationsamplitude (Δp̂ₚₚ) rechnerisch bestimmt und im Sinne einer Normierung von der gemessenen Pulsationsamplitude Δpₚₚ abgezogen. Jedenfalls lässt sich über die Bestimmung der Pulsationsamplitude der Beitrag des verschleißabhängigen Spaltes w_{w} zu dem Spalt w in der Dichtlinie modellieren und berücksichtigen (vgl. Fig. 4b). Der in Fig. 4b dargestellte verschleißabhängige Anteil w_{w} des Spaltes ergibt sich folglich entsprechend dem Diagramm in Fig. 3 durch folgenden Zusammenhang: ${w}_{w} = {k}_{3} n \left({Δp}_{pp}-{k}_{2} {t}_{x , pp}\right)$ wobei t_{x,pp} und damit (Δp̂ₚₚ) rein rechnerisch bestimmt werden. Der Spalt w_{w} lässt sich folglich wiederholt auf Basis der fortlaufenden Messung der Druckpulsationen berechnen.

Damit wird ein virtueller Sensor geschaffen, der auf einer adaptiven Bestimmung bzw. Überwachung einer repräsentativen Betriebsgröße, in diesem Fall der Druckdifferenz Δp, basiert. Durch wiederholte Berechnung des verschleißabhängigen Spaltanteils w_{w} als Funktion der Druckpulsationen erfolgt eine adaptive Anpassung an den Verschleißzustand. Die Erfindung basiert dabei auf der wichtigen Erkenntnis, dass die zu messenden Druckpulsationen unmittelbar mit der Verkippung des Rotors zusammenhängen, die einen den Rückstrom beeinflussenden Spalt bewirken. Da die Druckpulsationen wiederum verschleißabhängig sind, lässt sich über die Analyse der Druckpulsationen der Verschleiß direkt in der Modellierung berücksichtigen.

Die Erfindung ermöglicht eine verbesserte Überwachung und z. B. auch Wartungsvorhersagen unter dem Aspekt des "predictive maintenance".

## Patentansprüche

1. Verfahren zur Bestimmung oder Überwachung des effektiven Förderstroms (Q) einer Exzenterschneckenpumpe während des Betriebes,
wobei die Exzenterschneckenpumpe einen Stator (1) und einen in dem Stator (1) mit einer Pumpenfrequenz exzentrisch rotierenden Rotor (2) aufweist,
wobei der effektive Förderstrom (Q) aus der Differenz aus einem, idealen Förderstrom (Q₀) und einem dem idealen Förderstrom (Q₀) entgegen gerichteten Rückstrom (Q_{B}) bestimmt wird, der von zumindest einem Spalt (w) in der Dichtlinie zwischen Rotor (2) und Stator (1) abhängt,
wobei ein den Spalt und damit den Rückstrom (Q_{B}) repräsentierender Betriebsparameter der Pumpe gemessen wird, welcher periodisch mit der Pumpenfrequenz pulsiert und dessen Pulsationsamplitude einerseits von dem Verschleißzustand des Rotors und/oder des Stators abhängt und andererseits mit einer den Spalt (w) und damit den Rückstrom (Q_{B}) beeinflussenden Verkippung des Rotors (2) im Stator (1) zusammenhängt,
wobei der Rückstrom (Q_{B}) und daraus der effektive Förderstrom (Q) wiederholt mit einem mathematischen Modell in Abhängigkeit von den gemessenen Werten für den Betriebsparameter und von vorgegebenen Kennwerten der Pumpe und/oder des zu fördernden Mediums berechnet wird,
wobei als Betriebsparameter eine Parameterdifferenz verwendet wird,
**dadurch gekennzeichnet, dass** die aus der Messung der Parameterdifferenz bestimmte, verschleißabhängige Pulsationsamplitude (Δpₚₚ) unter Berücksichtigung einer Nenn-Pulsationsamplitude (Δp̂ₚₚ) korrigiert wird.

2. Verfahren nach Anspruch 1, wobei als Betriebsparameter ein Betriebsdruck der Pumpe bzw. des zu fördernden Mediums in oder an der Pumpe verwendet wird.

3. Verfahren nach Anspruch 2, wobei als Betriebsparameter eine Parameterdifferenz, in Form einer Druckdifferenz, vorzugsweise die Differenz (Δp) zwischen dem Druck (p₁) auf der Druckseite (D) des Stators und dem Druck (p₂) auf der Saugseite (S) des Stators (1) verwendet wird.

4. Verfahren nach einem der Ansprüche 1 bis 3, wobei zusätzlich die Drehzahl (n) der Pumpe bzw. des Rotors (2) gemessen oder zur Verfügung gestellt wird und in die Berechnung mit dem mathematischen Modell einfließt.

5. Verfahren nach einem der Ansprüche 1 bis 4, wobei als vorgegebene Kennwerte der Pumpe Geometrieparameter der Pumpe verwendet werden.

6. Verfahren nach einem der Ansprüche 3 bis 5, wobei aus der gemessenen Parameterdifferenz, z. B. Druckdifferenz (Δp) einerseits ein über zumindest eine Periode gemittelter Mittelwert als z. B. statische Druckdifferenz ( $\overline{Δp}$) und andererseits die Pulsationsamplitude (Δpₚₚ) als z. B. dynamische Druckdifferenz bestimmt werden.

7. Verfahren nach einem der Ansprüche 1 bis 6, wobei die Nenn-Pulsationsamplitude (Δp̂ₚₚ) auf der Pumpe im Neuzustand basiert.

8. Überwachungsvorrichtung für eine Exzenterschneckenpumpe, umfassend Mittel, die eingerichtet sind, das Verfahren nach einem der Ansprüche 1 bis 7 durchzuführen.

9. Überwachungsvorrichtung nach Anspruch 8, umfassend zumindest einen Sensor (11a, 11b) zur Messung des Betriebsparameters.

10. Überwachungsvorrichtung nach Anspruch 9, umfassend zumindest einen Drucksensor zur Messung eines Betriebsdruckes, z. B. zumindest einen Drucksensor (11a) zur Messung des Druckes (p₁) auf der Druckseite (D) des Stators und/oder zumindest einen Drucksensor (11b) zur Bestimmung des Druckes (p₂) auf der Saugseite (S) des Stators (1).

11. Computerprogramm, umfassend Befehle, die bewirken, dass die Überwachungsvorrichtung nach einem der Ansprüche 8 oder 10 das Verfahren nach einem der Ansprüche 1 bis 7 ausführt.

12. Exzenterschneckenpumpe mit einer Überwachungsvorrichtung nach einem der Ansprüche 8 bis 10.

## Claims

1. A method for determining or monitoring the effective delivery flow (Q) of an eccentric screw pump during operation,
wherein the eccentric screw pump has a stator (1) and a rotor (2) rotating eccentrically in the stator (1) at a pump frequency,
wherein the effective delivery flow (Q) is determined from the difference between an ideal delivery flow (Q₀) and a return flow (Q_{B}) directed counter to the ideal delivery flow (Q₀), which depends on at least one gap (w) in the sealing line between rotor (2) and stator (1),
wherein an operating parameter of the pump representing the gap and thus the return flow (Q_{B}) is measured, which pulses periodically at the pump frequency and the pulsation amplitude of which depends on the one hand on the wear state of the rotor and/or of the stator and on the other hand is related to a tilting of the rotor (2) in the stator (1), this tilting influencing the gap (w) and thus the return flow (Q_{B}),
wherein the return flow (Q_{B}) and from this the effective delivery flow (Q) are repeatedly calculated with a mathematical model as a function of the measured values for the operating parameter and of predetermined characteristic values of the pump and/or of the medium to be delivered,
wherein a parameter difference is used as the operating parameter,
**characterized in that** the wear-dependent pulsation amplitude (Δpₚₚ) determined from the measurement of the parameter difference is corrected taking into account a nominal pulsation amplitude (Δp̂ₚₚ).

2. The method according to claim 1, wherein an operating pressure of the pump or of the medium to be delivered is used in or on the pump as the operating parameter.

3. The method according to claim 2, wherein a parameter difference, in the form of a pressure difference, preferably the difference (Δp) between the pressure (p₁) on the pressure side (D) of the stator and the pressure (p₂) on the suction side (S) of the stator (1) is used as the operating parameter.

4. The method according to one of claims 1 to 3, wherein in addition the rotational speed (n) of the pump or of the rotor (2) is measured or provided and is included in the calculation with the mathematical model.

5. The method according to one of claims 1 to 4, wherein geometry parameters of the pump are used as predetermined characteristic values of the pump.

6. The method according to one of claims 3 to 5, wherein, from the measured parameter difference, for example a pressure difference (Δp), on the one hand an average value averaged over at least one period is determined as, for example, a static pressure difference ( $\overline{Δp}$), and on the other hand the pulsation amplitude (Δpₚₚ) is determined as, for example, a dynamic pressure difference.

7. The method according to one of claims 1 to 6, wherein the nominal pulsation amplitude (Δp̂ₚₚ) is based on the pump in the new state.

8. A monitoring device for an eccentric screw pump, including means which are set up to perform the method according to one of claims 1 to 7.

9. The monitoring device according to claim 8, including at least one sensor (11a, 11b) for measuring the operating parameter.

10. The monitoring device according to claim 9, including at least one pressure sensor for measuring an operating pressure, for example at least one pressure sensor (11a) for measuring the pressure (p₁) on the pressure side (D) of the stator and/or at least one pressure sensor (11b) for determining the pressure (p₂) on the suction side (S) of the stator (1).

11. A computer program, including commands which cause the monitoring device according to one of claims 8 or 10 to carry out the method according to one of claims 1 to 7.

12. An eccentric screw pump having a monitoring device according to one of claims 8 to 10.

## Revendications

1. Procédé de détermination ou de surveillance du débit de refoulement effectif (Q) d'une pompe à vis excentrique pendant le fonctionnement,
dans lequel la pompe à vis excentrique présente un stator (1) et un rotor (2) tournant de manière excentrique dans le stator (1) à une fréquence de pompe,
dans lequel le débit de refoulement effectif (Q) est déterminé à partir de la différence entre un débit de refoulement idéal (Q₀) et un reflux (Q_{B}) dirigé à l'opposé du débit de refoulement idéal (Q₀) et qui dépend d'au moins un espace (w) dans la ligne d'étanchéité entre le rotor (2) et le stator (1),
dans lequel il est mesuré un paramètre de fonctionnement de la pompe représentant l'espace et par conséquent le reflux (Q_{B}), lequel est pulsé périodiquement à la fréquence de pompe et dont l'amplitude de pulsation, d'une part, dépend de l'état d'usure du rotor et/ou du stator et, d'autre part, qui est liée à une inclinaison du rotor (2) dans le stator (1) influençant l'espace (w) et par conséquent le reflux (Q_{B}),
dans lequel le reflux (Q_{B}) et à partir de celui-ci le débit de refoulement effectif (Q) sont calculés de manière répétée à l'aide d'un modèle mathématique en fonction des valeurs mesurées du paramètre de fonctionnement et des valeurs caractéristiques prédéfinies de la pompe et/ou du fluide à pomper,
dans lequel une différence de paramètres est utilisée comme paramètre de fonctionnement,
**caractérisé en ce que** l'amplitude de pulsation dépendante de l'usure (Δpₚₚ),
déterminée à partir de la mesure de la différence de paramètres, est corrigée en tenant compte d'une amplitude de pulsation nominale (Δp̂ₚₚ).

2. Procédé selon la revendication 1, dans lequel une pression de fonctionnement de la pompe ou du fluide à refouler dans ou au niveau de la pompe est utilisée comme paramètre de fonctionnement.

3. Procédé selon la revendication 2, dans lequel le paramètre de fonctionnement utilisé est une différence de paramètres, sous forme d'une différence de pression, de préférence la différence (Δp) entre la pression (p₁) côté refoulement (D) du stator et la pression (p₂) côté aspiration (S) du stator (1).

4. Procédé selon l'une des revendications 1 à 3, dans lequel la vitesse de rotation (n) de la pompe ou du rotor (2) est également mesurée ou mise à disposition et est prise en compte dans le calcul à l'aide du modèle mathématique.

5. Procédé selon l'une des revendications 1 à 4, dans lequel des paramètres géométriques de la pompe sont utilisés comme valeurs caractéristiques prédéfinies de la pompe.

6. Procédé selon l'une des revendications 3 à 5, dans lequel il est déterminé à partir de la différence de paramètres mesurée, par ex. une différence de pression (Δp), d'une part, une valeur moyenne calculée sur au moins une période, sous la forme par ex. d'une différence de pression statique ( $\overline{Δp}$), et, d'autre part, l'amplitude de pulsation (Δpₚₚ) sous la forme par ex. d'une différence de pression dynamique.

7. Procédé selon l'une des revendications 1 à 6, dans lequel l'amplitude de pulsation nominale (Δp̂ₚₚ) est basée sur la pompe à l'état neuf.

8. Dispositif de surveillance d'une pompe à vis excentrique, comprenant des moyens prévus pour mettre en œuvre le procédé selon l'une des revendications 1 à 7.

9. Dispositif de surveillance selon la revendication 8, comprenant au moins un capteur (11a, 11b) permettant de mesurer le paramètre de fonctionnement.

10. Dispositif de surveillance selon la revendication 9, comprenant au moins un capteur de pression pour mesurer une pression de fonctionnement, par. ex. au moins un capteur de pression (11a) permettant de mesurer la pression (p₁) côté refoulement (D) du stator et/ou au moins un capteur de pression (11b) pour la détermination de la pression (p₂) côté aspiration (S) du stator (1).

11. Programme informatique comprenant des instructions qui amènent le dispositif de surveillance selon l'une des revendications 8 ou 10 à mettre en œuvre le procédé selon l'une des revendications 1 à 7.

12. Pompe à vis excentrique avec un dispositif de surveillance selon l'une des revendications 8 à 10.
